# EUROPÄISCHE PATENTSCHRIFT

(11) **EP 0 966 169 B1**
(45) Veröffentlichungstag und Bekanntmachung des Hinweises auf die Patenterteilung: **06.10.2004**
(21) Anmeldenummer: 99440152.9
(22) Anmeldetag: 18.06.1999
(51) Int. Cl.: H04Q 3/545, G06F 12/02

(54) **Sicherungsverfahren für Betriebsdaten eines Netzelementes und Steuerungseinrichtung für ein Netzelement**
Protection method for operational data of a network element and control device for a network element
Procédé de protection de données opérationelles d'un élément de réseau et dispositif de commande pour un élément de réseau

(30) Priorität: 20.06.1998 DE 19827637
(43) Veröffentlichungstag der Anmeldung: 22.12.1999
(73) Patentinhaber: ALCATEL, 75008 Paris (FR)
(72) Erfinder: Nusch, Dietmar, 70376 Stuttgart (DE); Banzhaf, Monika, 70439 Stuttgart (DE); Knebel, Uwe, 76646 Bruchsal (DE)
(74) Vertreter: Rausch, Gabriele, Dr.

(56) Entgegenhaltungen:
- US-A- 4 734 855
- US-A- 5 625 820
- COLOMBO S ET AL: "TECHNOLOGIE DER SDH-NETZELEMENTE: DIE SOFTWARE-PLATTFORM" ELEKTRISCHES NACHRICHTWESEN, 1. Oktober 1993 (1993-10-01), Seiten 322-328, XP001038464 ISSN: 1242-0557

## Beschreibung

Die Erfindung betrifft ein Verfahren zum Sichern von Betriebsdaten einer Steuerungseinrichtung eines Netzelementes nach dem Oberbegriff des Anspruchs 1 sowie eine Steuerungseinrichtung für eine Netzelement nach dem Oberbegriff des Anspruchs 9.

Unter einem Netzelement werden Einrichtungen eines Nachrichtennetzes verstanden, die beispielsweise dazu dienen, Verbindungen innerhalb des Netzes einzurichten, Zugänge zu dem Netz zu schaffen, Verbindungen in dem Netz zu vermitteln oder das Übertragungsformat von Nachrichten, die in dem Netz übertragen werden, zu verändern. In einem synchronen digitalen Nachrichtenübertragungsnetz der synchronen digitalen Hierarchie (SDH) oder des *Synchronous Optical Networks* (SONET) zählen zu den Netzelementen Crossconnects, Add/Drop-Multiplexer und Leitungsmultiplexer.

Solche Netzelemente enthalten eine Steuerungseinrichtung zur Steuerung und Überwachung der netzelementspezifischen Funktionen. In dem Artikel "Technologie der SDH-Netzelemente: die Software-Plattform" von S. Colombo et al., Elektrisches Nachrichtenwesen 4. Quartal 1993, S.322-328, ist beschrieben, daß Netzelemente nach einer objektorientierten Spezifikation arbeiten und gesteuert werden, die von internationalen Normungsgremien wie CCITT (heute ITU-T), ETSI oder ANSI, festgelegt wurden. Funktionen der Netzelemente werden in Form von verwalteten Objekten (MO - Managed Objects) beschrieben und verwirklicht.

Verwaltete Objekte sind real existierende Abbildungen - und damit Beschreibungen statischer und dynamischer Eigenschaften - von physikalischen oder virtuellen Komponenten (Ressourcen) des verwalteten Netzelementes. Entsprechend der CCITT Empfehlung X.720 (1/92) wird unter einem verwalteten Objekt eine zum Zweck des Managements bestehende Abstraktion von Datenverarbeitungs- und Datenkommunikations-Ressourcen (z.B. Protokollstatus-Automaten, Verbindungen oder Modems) verstanden.

Die Steuerungseinrichtung eines Netzelementes enthält nach dem oben genannten Artikel von S. Colombo et al. eine CPU, einen Speicher und Dauerspeicher. In dem Speicher sind eine Reihe verwalteter Objekte gespeichert, die in dem Dauerspeicher gesichert werden. Das Sichern der verwalteten Objekte in dem Dauerspeicher ist jedoch langsam und führt bei der großen Zahl verwalteter Objekte im Speicher zu einem Engpaß.

Aufgabe der Erfindung ist es, ein Verfahren zum Sichern von Betriebsdaten eines Netzelementes zu schaffen, das schneller arbeitet als bekannte Sicherungsverfahren. Eine weitere Aufgabe ist es, eine Steuerungseinrichtung für ein Netzelement anzugeben, die zur Durchführung des Verfahrens geeignet ist.

Die Aufgabe wird hinsichtlich des Verfahrens gelöst durch die Merkmale des Anspruchs 1 und hinsichtlich der Steuerungseinrichtung durch die Merkmale des Anspruchs 9. Vorteilhafte Ausgestaltungen sind den abhängigen Ansprüchen zu entnehmen.

Als vorteilhaft erweist sich, daß die Erfindung stets die Konsistenz der in dem nichtflüchtigen Speicher gesicherten Betriebsdaten gewährleistet. Jede Änderung an einem verwalteten Objekt wird nach Erhalt einer Ausführungsbestätigung (commit) in dem nichtflüchtigen Speicher gesichert und somit wird gewährleistet, daß in dem nichtflüchtigen Speicher stets eine konsistente Sicherungskopie der Betriebsdaten aus dem Speichers enthalten ist. Dadurch wird erreicht, daß nach einem Systemabsturz der zuletzt gültige Zustand wieder hergestellt werden kann.

Vorteilhafterweise ist der nichtflüchtige Speicher als Datenbank strukturiert. Dadurch wird die zusichernde Datenmenge reduziert und die Betriebsdaten können schneller wiedergefunden werden.

Im folgenden wird die Erfindung anhand der Figuren 1 bis 3 in einem Ausführungsbeispiel beschrieben. Es zeigt:
- Figur 1:: den schematischen Ablauf eines erfindungsgemäßen Sicherungsvorganges,
- Figur 2:: eine erfindungsgemäße Steuerungseinrichtung für ein Netzelement,
- Figur 3:: ein Flußdiagram des erfindungsgemäßen Sicherungsverfahrens.

Verwaltete Objekte sind Abbildungen von physikalischen oder virtuellen Komponenten des Netzelementes, die die statischen und dynamischen Eigenschaften der jeweiligen Komponente beschreiben. Ein verwaltetes Objekt ist eine Instanz einer Klasse verwalteter Objekte. Eine solche Klasse verwalteter Objekte ist definiert durch ihre Attribute, die von ihren Objekten ausführbaren Operationen (engl. operations), die Meldungen (engl. notifications), die ihre Objekte erzeugen können, und ihr Verhalten (engl. related behaviour). Jedes verwaltete Objekt besitzt einen eindeutigen Namen. Von Standpunkt des Managementsystems aus existiert ein verwaltetes Objekt dann, wenn es einen eindeutigen Namen hat und wenn es die Operationen und Meldungen unterstützt, die für seine Klasse definiert sind.

Die Gesamtheit der in einem Netzelement existierenden verwalteten Objekte zusammen mit deren Attributen wird als *Managed Information* *Base*, kurz MIB, bezeichnet und spiegelt die aktuelle Konfiguration des Netzelementes wider. Die verwalteten Objekte sind in einem Speicher (meistens ein RAM) gespeichert und in einer Datenbank, die sich auf einem nichtflüchtigen Speicher (z.B. einer Festplatte) des Netzelementes befindet, redundant gesichert. Diese Datenbank wird auch mit dem englischen Ausdruck *persistency* oder *persistency database* bezeichnet.

Ein Netzelement eines Telekommunikationsnetzes wird unter Verwendung solcher verwalteter Objekte gesteuert und verwaltet. Um in einem Fehlerfall, beispielsweise nach einem Systemabsturz oder einem Stromausfall, die zuletzt gültige Konfiguration des Nachrichtennetzes wiederherstellen zu können, ist es notwendig, die Betriebsdaten des Netzelementes in dem nichtflüchtigen Speicher zu sichern. Zu den Betriebsdaten zählen vor allem die den Attributen der verwalteten Objekte zugewiesenen Daten. Unter Betriebsdaten werden in diesem Zusammenhang also Konfigurationsparameter sowie Ereignis- und Zustandsdaten verstanden. Dabei ist es erforderlich, daß die im nichtflüchtigen Speicher gesicherten Betriebsdaten mit dem aktuellen Speicherinhalt des Arbeitsspeichers der Netzelementsteuerung konsistent sind. Konsistent in diesem Zusammenhang bedeutet, daß jede bestätigte Änderung eines verwalteten Objektes im nichtflüchtigen Speicher abgelegt werden muß. Es ist außerdem erforderlich, daß der Sicherungsvorgang robust gegen Störungen ist, daß z.B. auch nach einem Systemfehler während des Schreibzugriffes auf den nichtflüchtigen Speicher eine Version der zuletzt gültigen Betriebsdaten vorliegt, die eine vollständige Restaurierung des Systems nach dem Systemfehler zuläßt.

Der nichtflüchtige Speicher ist vorteilhaft zu einer Datenbank strukturiert. Dabei ist gefordert, daß die zum Sichern erfolgenden Datenbankzugriffe die Leistungsfähigkeit des Netzelementes nicht oder höchstens geringfügig herabsetzen. Die Erfindung beruht daher auf der Erkenntnis, daß schnelle Schreibzugriffe verlangt werden. Lesezugriffe hingegen brauchen nicht mit hoher Zugriffsgeschwindigkeit durchgeführt zu werden, da Lesezugriffe meist nur im Falle einer Restaurierung der Netzelementkonfiguration von Bedeutung sind. Bekannte Datenbanken wie relationale oder objektorientierte Datenbanken erfüllen die genannten Anforderungen an Geschwindigkeit und Robustheit der Datenbank nicht.

Ein Grundgedanke der Erfindung liegt darin, die verwalteten Objekte in Gruppen einzuteilen. Im Falle eines Schreibzugriffes, bei dem die Attribute eines geänderten oder neu erzeugten verwalteten Objektes zu sichern sind, erfolgt der Schreibzugriff auf den nichtflüchtigen Speicher unter Verwendung eines gruppenspezifischen Softwaremoduls. Auch das Auslesen der gespeicherten Betriebsdaten aus der Datenbank erfolgt unter Verwendung des gruppenspezifischen Softwaremoduls. Durch die Verwendung solcher gruppenspezifischer Softwaremodule kann den unterschiedlichen Erfordernissen in Hinsicht auf Zugriffsmöglichkeiten, Robustheit und Geschwindigkeit der unterschiedlichen verwalteten Objekte Rechnung getragen werden. Diese Erfordernisse bilden daher die Kriterien für die Gruppeneinteilung.

Die Softwaremodule sind ausführbare Programmteile oder Unterprogramme aus Steuerbefehlen, die in einer Maschinensprache kodiert sind und die von einem Prozessor ausführbar sind. Jeder Gruppe verwalteter Objekte ist genau ein gruppenspezifisches Softwaremodul zugeordnet.

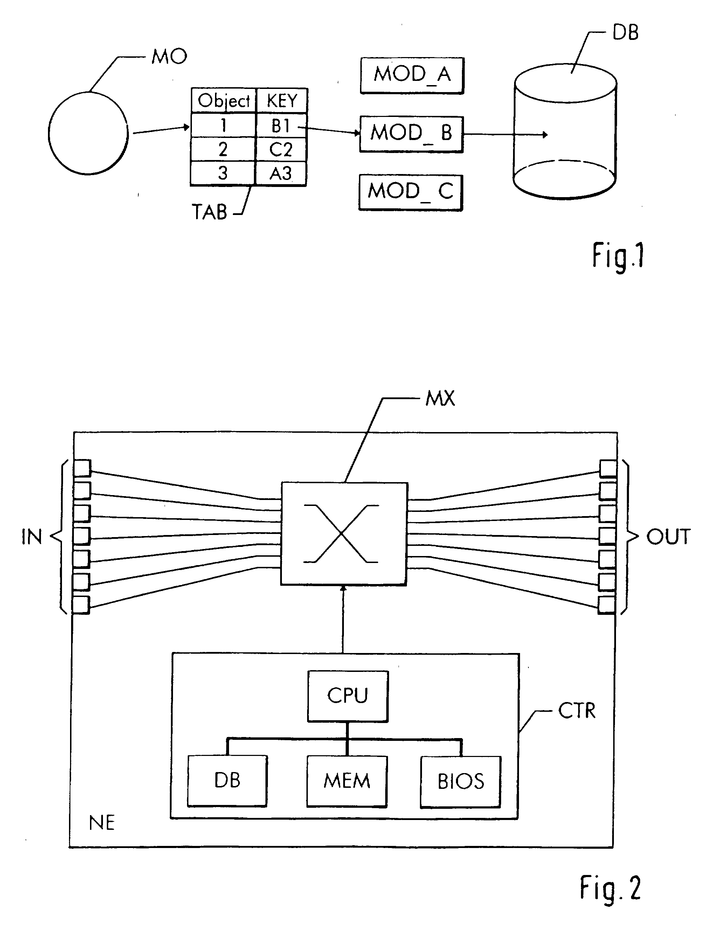

Figur 1 zeigt den Ablauf eines Sicherungsvorganges schematisch. Ein verwaltetes Objekt MO ist zu sichern. In einer Tabelle TAB sind Zugriffsschlüssel KEY für alle verwalteten Objekte vermerkt, die die Speicherstelle in dem nichtflüchtigen Speicher angeben. Die Gruppenzugehörigkeit des zu sichernden verwalteten Objektes MO ist aufgrund dessen Objektklasse vorbekannt: Das verwaltete Objekt MO gehört zu der Gruppe B, der Gruppe der Protokolldateien. Dementsprechend wird das für die Gruppe B zuständige Softwaremodul MOD_B zum Zugriff auf die Datenbank DB verwendet. Anhand der Tabelle wird der Zugriffsschlüssel KEY für das verwaltete Objekt MO festgestellt.

Ein Ausführungsbeispiel für eine erfindungsgemäße Steuerungseinrichtung eines Netzelementes ist in Figur 2 dargestellt. Bei dem Netzelement NE handelt es sich um einen digitalen Crossconnect eines digitalen synchronen Nachrichtenübertragungssystems, welches nach den Empfehlungen für SDH (synchronous digital hierarchy) oder SONET (synchronous optical network) arbeitet. In einem solchen Nachrichtenübertragungsnetz werden Nachrichten in synchronen Transportmodulen verpackt übertragen. Der Crossconnect hat eine Schaltmatrix MX, mittels der Verbindungen zwischen seinen Eingängen IN und seinen Ausgängen OUT geschaltet werden, und zwar sowohl in der Raum- als auch in der Zeitdomäne. Außerdem rangiert der Crossconnect Untereinheiten der Transportmodule, sogenannte virtuelle Container, zwischen den Transportmodulen. Dadurch können mit Hilfe eines solchen Crossconnects virtuelle Verbindungen in dem Nachrichtenübertragungsnetz eingerichtet werden. An den Eingängen IN und den Ausgängen OUT werden Nachrichtensignale vom Typ STM-4 (synchrones Transportmodul) verarbeitet.

Für jeden Endpunkt der Schaltmatrix existiert ein verwaltetes Objekt. Außerdem existieren verwaltete Objekte für alle eingerichteten virtuellen Verbindungen.

Physikalisch ist der Crossconnect aus einer Vielzahl von Leiterplatten (Boards) aufgebaut, wobei jede Leiterplatte von einem eigenen sogenannten On-Board-Controller gesteuert wird. Für jede Leiterplatte existiert ebenfalls ein verwaltetes Objekt, welches die Funktionen und die Konfiguration der zugehörigen Leiterplatte beschreibt.

In dem Netzelement NE ist eine Steuerungseinrichtung CTR untergebracht, die die Funktionen des Netzelementes steuert und überwacht, Störungen erkennt, entsprechende Fehlermeldungen generiert und Anforderungen von einem übergeordneten Managementsystem des Nachrichtenübertragungsnetzes empfängt und verarbeitet. Die Steuerungseinrichtung weist einen Prozessor CPU zur Steuerung des Netzelementes, einen Speicher MEM, in dem die verwalteten Objekte gespeichert sind, und einen nichtflüchtigen Speicher DB auf. Der nichtflüchtige Speicher ist eine Festplatte. Alternativ können jedoch auch andere Datenträger oder nichtflüchtige Speichertypen verwendet werden. Die Steuerungseinrichtung hat außerdem einen weiteren Speicher BIOS, beispielsweise ein EEPROM oder eine zweite Festplatte, in dem ein Betriebssystem gespeichert ist. Im Ausführungsbeispiel handelt es sich bei dem Betriebssystem um ein UNIX-System. In dem weiteren Speicher BIOS sind auch die zum Speichern benötigten gruppenspezifischen Softwaremodule enthalten. Physikalisch kann der weitere Speicher auch mit dem nichtflüchtigen Speicher in einem einzigen Speichermedium kombiniert sein.

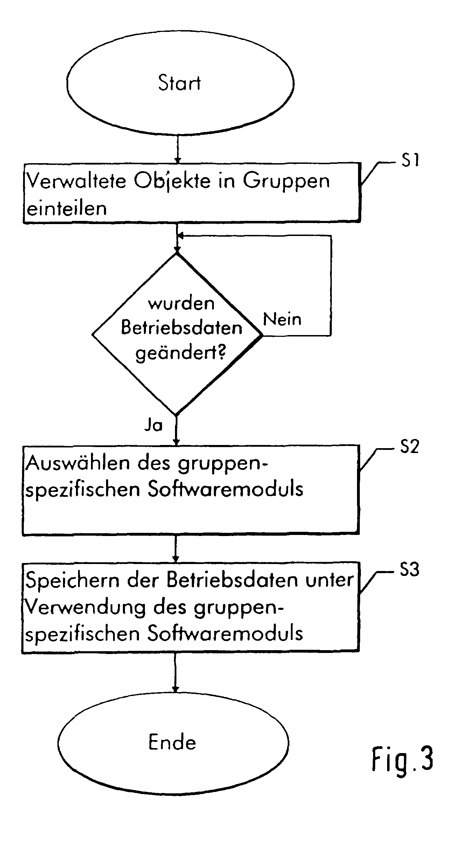

Bei dem in Figur 3 gezeigten Sicherungsverfahren für Betriebsdaten des Netzelementes wird zunächst folgender Schritt durchgeführt:
- Schritt S1:: Einteilen der verwalteten Objekte in Gruppen. Die Einteilung ist vorgegeben und abhängig von der Objektklasse des jeweiligen verwalteten Objektes. Sie trägt den Anforderungen an Zugriffsmöglichkeiten (Lesen, Schreiben, Ändern), Robustheit und Geschwindigkeit der unterschiedlichen verwalteten Objekte Rechnung.

Sollen nun die Betriebsdaten eines geänderten oder neu erstelllten verwalteten Objektes gesichert werden, so werden die folgenden Schritte durchgeführt:
- Schritt S2:: Auswählen des gruppenspezifischen Softwaremodules in Abhängigkeit von der Gruppenzugehörigkeit des zu sichernden verwalteten Objektes und
- Schritt S3:: Speichern der Betriebsdaten des verwalteten Objektes unter Verwendung des gruppenspezifischen Softwaremodules.

Im Ausführungsbeispiel sind folgende Gruppen von verwalteten Objekten vorgesehen:
- Gruppe A:: Hierzu gehören alle verwalteten Objekte, deren Dateneinträge eine variable Länge haben, unter anderem Objekte von Endpunkten der Schaltmatrix, Objekte für virtuelle Verbindungen und Objekte für Leiterplatten. Die Dateneinträge dieser verwalteten Objekte im nichtflüchtigen Speicher können erstellt, geändert und gelöscht werden. Bei Änderungen kann ihre Länge verändert werden. Der Schreibzugriff erfolgt dergestalt, daß die Betriebsdaten eines zu sichernden verwalteten Objektes dieser Gruppe zunächst in einen freien Bereich des nichtflüchtigen Speichers geschrieben werden und der Bereich, in dem die Vorgängerversion des Objektes gespeichert ist, nach erfolgreicher Beendigung des Schreibzugriffs als frei markiert wird.
- Gruppe B:: Die Gruppe B umfaßt verwaltete Objekte für Protokolldateien. Diese Einträge können erstellt und gelöscht, niemals jedoch verändert werden. Für Betriebsdaten von Objekten der Gruppe B ist ein Bereich des nichtflüchtigen Speichers mit vorgegebener Größe vorgesehen. Ist die Speicherkapazität dieses Bereiches erschöpft, so wird der Speicherbereich von dem gruppenspezifischen Softwaremodul "aufgeräumt", indem alte Einträge gelöscht werden.
- Gruppe C:: Die Gruppe C umfaßt verwaltete Objekte für Leistungsüberwachung, sogenanntes Performance Monitoring, einem regelmäßigen alle 15 min und alle 24 h stattfindenden Überwachungsvorgang. Die Dateneinträge haben eine feste Länge, die sich nicht ändert, wenn die Einträge geändert werden. In dem nichtflüchtigen Speicher ist eine festgelegte Anzahl von Dateneinträgen vorgesehen, die periodisch ersetzt werden. Jeder überwachten Einheit des Netzelementes sind zwei Einträge in dem nichtflüchtigen Speicher zugewiesen, die abwechselnd mit neuen Betriebsdaten überschrieben werden.

Für diese drei Gruppen sind in dem weiteren Speicher BIOS gruppenspezifische Softwaremodule enthalten, die die oben genannten Funktionen beim Abspeichern der Betriebsdaten ausführen. Bei den Softwaremodulen handelt es sich um Speichermanager für den nichtflüchtigen Speicher.

Wird ein verwaltetes Objekt neu erstellt, geändert oder gelöscht, so werden die zugehörigen Betriebsdaten im nichtflüchtigen Speicher aktualisiert. Dazu werden erfindungsgemäß die Betriebsdaten unter Verwendung des zugehörigen gruppenspezifischen Softwaremoduls gespeichert beziehungsweise gelöscht.

Im Ausführungsbeispiel ist die Gruppenzugehörigkeit aller verwalteten Objekte durch die Objektklasse statisch vorbestimmt und wird nicht dynamisch verändert. D.h. wenn ein verwaltetes Objekt neu erzeugt wird, ist durch den Typ des verwalteten Objektes bestimmt, zu welcher Gruppe es gehört. Für die verschiedenen Gruppen sind getrennte Bereiche in der Datenbank DB vorgesehen, in denen die Betriebsdaten der Objekte dieser Gruppe gespeichert werden. Zu jeder Gruppe existiert im Speicher genau eine gruppenspezifische Tabelle. Diese Tabelle realisiert die Abbildung der verwalteten Objekte auf die Bereiche der Datenbank, wo die Betriebsdaten der verwalteten Objekte physikalisch gespeichert sind. Die Tabelle wird im Ausführungsbeispiel benötigt, um die Betriebsdaten wieder lesen zu können.

Die Tabellen enthalten für die verwalteten Objekte jeweils einen Zugriffsschlüssel für die Datenbank. Der Zugriffsschlüssel gibt beispielsweise in Form einer fortlaufenden Nummer oder einer Adresse die Speicherstelle in der Datenbank an, wo die Betriebsdaten des zu speichernden Objektes wiederzufinden sind. Die Verknüpfung zwischen Objekt und Zugriffsschlüssel erfolgt über den eindeutigen Namen des Objektes. Der Zugriffsschlüssel wird mit dem Erzeugen des Objektes erstellt. Die Tabelle hat die in Figur 1 gezeigte zweispaltige Form, wobei in der ersten Spalte Object die eindeutigen Objektnamen 1, 2, 3 stehen und in der zweiten Spalte KEY die jeweils zugehörigen Zugriffsschlüssel verzeichnet sind.

Die Tabellen können nach einem Systemfehler, z.B. einem Systemabsturz wieder aus der Datenbank rekonstruiert werden. Dazu enthält die Datenbank Informationen über die Gruppenzugehörigkeit jedes Eintrages.

So können beim Rekonstruieren die einzelnen physikalischen Einträge der Datenbank wieder den ursprünglichen Gruppen-Tabellen zugeordnet werden.

Die Tabellen können also auf zwei Arten gefüllt werden: Einerseits werden im normalen Betrieb des Netzelementes Tabelleneinträge beim dynamischen Erzeugen von verwalteten Objektes erstellt. Andererseits werden nach einem Neustart des Systems etwa in Folge eines Absturzes die Tabellen aus den vorhandenen Einträgen der Datenbank rekonstruiert. Für die Rekonstruktion ist die Gruppenzugehörigkeit der Datenbankeinträge mit in dem nichtflüchtigen Speicher abgespeichert. Für den normalen Schreibzugriff, bei dem die Betriebsdaten eines geänderten oder neu erzeugten verwalteten Objektes abzuspeichern sind, ist die Gruppenzugehörigkeit aus der Art (Objektklasse) des Objektes bekannt, wird also nicht aus einer Tabelle bestimmt. Statt dessen wird im Falle der Neuerzeugung ein Zugriffschlüssel für das Objekt in dessen vorbestimmte gruppenspezifische Tabelle eingetragen.

Eine andere Möglichkeit besteht darin, die Gruppenzugehörigkeit eines verwalteten Objektes in einer einzigen Tabelle zu vermerken und im Falle eines Zugriffes dessen Gruppenzugehörigkeit anhand der Tabelle festzustellen um das richtige Softwaremodul für den Datenbankzugriff zu ermitteln.

Bei einer anderen vorteilhaften Weiterbildung der Erfindung ist vorgesehen, eine Transaktion, die Änderungen mehrerer verwalteter Objekte zusammenfaßt, erst nach erfolgter Bestätigung (commit) der Transaktion im nichtflüchtigen Speicher zu sichern. Nach erfolgter Bestätigung werden alle geänderten Objekte, wenn dies möglich ist, an einen freien, physikalisch zusammenhängenden Speicherplatz geschrieben. Dadurch werden Bewegungen der Schreibköpfe minimiert, wenn eine Festplatte als nichtflüchtiger Speicher verwendet wird.

## Patentansprüche

1. Verfahren zum Sichern von Betriebsdaten einer Steuerungseinrichtung (CTR) eines Netzelementes (NE), bei dem die Betriebsdaten in Form von verwalteten Objekten (MO) vorliegen und nach einer Aktualisierung in einen nichtflüchtigen Speicher (DB) der Steuerungseinrichtung (CTR) geschrieben werden,
**dadurch gekennzeichnet, daß**
die verwalteten Objekte (MO) in Gruppen (A, B, C) eingeteilt werden, denen jeweils ein gruppenspezifisches Softwaremodul zugeteilt ist, und daß die Betriebsdaten eines zu sichernden verwalteten Objektes (MO) unter Verwendung des gruppenspezifischen Softwaremodules (MOD_B) gespeichert werden.

2. Verfahren nach Anspruch 1, bei dem der nichtflüchtige Speicher (DB) zu einer Datenbank strukturiert ist.

3. Verfahren nach Anspruch 1, bei dem die Betriebsdaten der verwalteten Objekte (MO) entsprechend ihrer Gruppenzugehörigkeit in getrennten Bereichen des nichtflüchtigen Speichers (DB) gespeichert werden.

4. Verfahren nach Anspruch 1, bei dem eine der Gruppen (A) verwaltete Objekte umfaßt, deren Dateneinträge eine variable Länge haben, und bei dem zum Speichern eines zu sichernden verwalteten Objektes dieser Gruppe (A), die Betriebsdaten des zu sichernden verwalteten Objektes zunächst in einen freien Bereich des nichtflüchtigen Speichers (DB) geschrieben werden und anschließend der Bereich, in dem die Vorgängerversion des Objektes gespeichert ist, nach erfolgreicher Beendigung des Schreibzugriffs als frei markiert wird.

5. Verfahren nach Anspruch 1, bei dem eine der Gruppen (B) verwaltete Objekte für Protokolldateien umfaßt und bei dem zum Speichern eines zu sichernden verwalteten Objektes dieser Gruppe die Betriebsdaten des zu sichernden verwalteten Objektes in einen Bereich des nichtflüchtigen Speichers (DB) mit vorgegebener Größe geschrieben werden und der Bereich im Falle, daß dessen Speicherkapazität erschöpft ist, aufgeräumt wird, indem alte Einträge gelöscht werden.

6. Verfahren nach Anspruch 1, bei dem eine der Gruppen (C) verwaltete Objekte für Leistungsüberwachung umfaßt, bei dem für verwaltete Objekte dieser Gruppe eine festgelegte Anzahl von Dateneinträgen in dem nichtflüchtigen Speicher (DB) vorgesehen, die zum Speichern von Objekten dieser Gruppe periodisch ersetzt werden.

7. Verfahren nach Anspruch 2, bei dem mehrere Änderungen verwalteter Objekte zu einer Transaktion zusammengefaßt werden und die Änderungen erst nach erfolgreicher Ausführung der Transaktion in die Datenbank (DB) übernommen werden.

8. Verfahren nach Anspruch 2, bei dem die Gruppenzugehörigkeit eines zu sichernden verwalteten Objektes (MO) aufgrund dessen Objektklasse vorbestimmt ist und bei dem ein Zugriffsschlüssel (KEY) für das zu sichernde verwaltete Objekt (MO) in einer Tabelle (TAB) verzeichnet wird, der die Speicherstelle im nichtflüchtigen Speicher (DB) angibt.

9. Steuerungseinrichtung (CTR) für ein Netzelement (NE) mit einem Prozessor (CPU), einem Speicher (MEM) und einem nichtflüchtigen Speicher (DB) in dem Betriebsdaten des Netzelementes (NE), die in Form von verwalteten Objekten (MO) vorliegen, abgespeichert sind,
**dadurch gekennzeichnet,**
- **daß** die Steuerungseinrichtung (CTR) gruppenspezifische Softwaremodule (MOD_A, MOD_B, MOD_C) zum Speichern der Betriebsdaten von zu sichernden verwalteten Objekten (MO) enthält und
- **daß** die verwalteten Objekte (MO) in Gruppen (A, B, C) eingeteilt sind, denen jeweils eines der gruppenspezifischen Softwaremodule zugeteilt ist.

10. Steuerungseinrichtung (CTR) nach Anspruch 9, bei der der nichtflüchtige Speicher (DB) zu einer Datenbank strukturiert ist.

11. Steuerungseinrichtung nach Anspruch 9, bei der für die einzelnen Gruppen (A, B, C) getrennte Bereiche in dem nichtflüchtigen Speicher (DB) vorgesehen sind.

## Claims

1. Method for backing up operational data for a control device (CTR) of a network element (NE), in which the operational data is present in the form of managed objects (MO) and following an update is written to a nonvolatile storage unit (DB) of the control device (CTR),
**characterised in that**
the managed objects (MO) are classified into groups (A, B, C), to each of which a group-specific software module is assigned, and that the operational data of a managed object (MO) to be backed up is stored using the group-specific software module (MOD_B).

2. Method according to Claim 1, in which the nonvolatile storage unit (DB) is structured into a database.

3. Method according to Claim 1, in which the operational data of the managed objects (MO) is stored according to their group membership in separate areas of the nonvolatile storage unit (DB).

4. Method according to Claim 1, in which one of the groups (A) comprises managed objects whose data entries have a variable length, and in which, to store a managed object of this group (A) in a backup, the operational data of the managed object that is being backed up is first written into a free area of the nonvolatile storage (DB), and then the area in which the preceding version of the object is stored is marked as free after the write access is successfully completed.

5. Method according to Claim 1, in which one of the groups (B) comprises managed objects for protocol files, and in which, to store a managed object of this group in a backup, the operational data of the managed object that is being backed up is written into an area of preset size in the nonvolatile storage (DB), and the area is tidied up by deleting old entries in the event that its memory capacity is exhausted.

6. Method according to Claim 1, in which one of the groups (C) comprises managed objects for performance monitoring, in which a fixed number of data entries is provided in the nonvolatile storage unit (DB) for managed objects of this group, the entries being periodically replaced for storing objects of this group.

7. Method according to Claim 2, in which several changes to managed objects are combined in one transaction, and the changes are transferred to the database (DB) only after successful execution of the transaction.

8. Method according to Claim 2, in which the group membership of a managed object (MO) to be backed up is predetermined by its object class, and in which an access key (KEY) is recorded in a table (TAB) for the managed object (MO) to be backed up, the said key specifying the storage position in the nonvolatile storage (DB).

9. Control device (CTR) for a network element (NE) with a processor (CPU), a memory (MEM) and a nonvolatile storage unit (DB) in which operational data of the network element (NE), being present in the form of managed objects (MO), is stored,
**characterised in that**
- the control device (CTR) contains group-specific software modules (MOD_A, MOD_B, MOD_C) for storing the operational data of managed objects (MO) to be backed up, and that
- the managed objects (MO) are classified into groups (A, B, C), to each of which one of the group-specific software modules is assigned.

10. Control device (CTR) according to Claim 9, in which the nonvolatile storage unit (DB) is structured into a database.

11. Control device according to Claim 9, in which separate areas are provided in the nonvolatile storage unit (DB) for the individual groups (A, B, C).

## Revendications

1. Procédé de sauvegarde de données de fonctionnement d'un dispositif de commande (CTR) d'un élément de réseau (NE), dans lequel les données de fonctionnement existent sous la forme d'objets gérés (MO) et sont écrites, après la mise à jour dans une mémoire non volatile (DB) du dispositif de commande (CTR), **caractérisé en ce que** les objets gérés (MO) sont répartis dans des groupes (A, B, C) à chacun desquels est attribué un module logiciel spécifique au groupe, et **en ce que** les données de fonctionnement d'un objet géré (MO) à sauvegarder sont enregistrées à l'aide d'un module logiciel spécifique au groupe (MOD_B).

2. Procédé selon la revendication 1, dans lequel la mémoire non volatile (DB) est structurée comme une base de données.

3. Procédé selon la revendication 1, dans lequel les données de fonctionnement des objets gérés (MO) sont enregistrés, en fonction de leur appartenance à un groupe, dans des emplacements séparés de la mémoire non volatile (DB).

4. Procédé selon la revendication 1, dans lequel un des groupes (A) comprend des objets gérés dont les enregistrements ont une longueur variable et dans lequel, pour enregistrer un objet géré à sauvegarder de ce groupe (A), les données de fonctionnement de l'objet géré à sauvegarder sont d'abord écrites dans un emplacement libre de la mémoire non volatile (DB) puis l'emplacement dans lequel la version précédente de l'objet est enregistrée est marquée comme étant libre à la fin de l'accès en écriture réussi.

5. Procédé selon la revendication 1, dans lequel un des groupes (B) comprend des objets gérés pour les fichiers de protocoles et dans lequel, pour enregistrer un objet géré à sauvegarder de ce groupe, les données de fonctionnement de l'objet géré à sauvegarder sont écrites dans un emplacement de la mémoire non volatile (DB) avec une taille prédéterminée et, lorsque sa capacité de mémoire est épuisé, l'emplacement est vidé en supprimant les anciens enregistrements.

6. Procédé selon la revendication 1, dans lequel un des groupes (C) comprend des objets gérés pour la surveillance de la performance et dans lequel, pour les objets gérés de ce groupe, un nombre déterminé d'enregistrements sont prévus dans la mémoire non volatile (DB), qui sont remplacés périodiquement pour l'enregistrement des objets de ce groupe.

7. Procédé selon la revendication 2, dans lequel plusieurs modifications d'objets gérés sont regroupés en une transaction et les modifications ne sont prises en compte qu'après la réalisation réussie de la transaction dans la base de données (DB).

8. Procédé selon la revendication 2, dans lequel l'appartenance à un groupe d'un objet géré (MO) à sauvegarder est prédéterminée par sa classe d'objet et dans lequel une clé d'accès (KEY) pour l'objet géré (MO) à sauvegarder est indiquée dans un tableau (TAB) qui indique l'emplacement dans la mémoire non volatile (DB).

9. Dispositif de commande (CTR) pour un élément de réseau (NE) avec un processeur (CPU), une mémoire (MEM) et une mémoire non volatile (DB) dans laquelle les données de fonctionnement de l'élément de réseau (NE), qui se présentent sous la forme d'objets gérés (MO), sont enregistrées, **caractérisé en ce que** :
- le dispositif de commande (CTR) contient des modules logiciels spécifiques aux groupes (MOD_A, MOD_B, MOD_C) pour enregistrer les données de fonctionnement d'objets gérés (MO) à sauvegarder et
- les objets gérés (MO) sont répartis dans des groupes (A, B, C) à chacun desquels est associé un des modules logiciels spécifiques aux groupes.

10. Dispositif de commande (CTR) selon la revendication 9, dans lequel la mémoire non volatile (DB) est structurée comme une base de données.

11. Dispositif de commande selon la revendication 9, dans lequel des emplacements séparés sont prévus pour les différents groupes (A, B, C) dans la mémoire non volatile (DB).
